(19) Europäisches Patentamt / European Patent Office / Office européen des brevets

(11) **EP 3 176 541 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(21) Anmeldenummer: **16196929.0**

(22) Anmeldetag: **02.11.2016**

(51) Int Cl.:
*G01C 9/06* (2006.01)     *B60W 50/14* (2012.01)
*B60Q 9/00* (2006.01)     *G06K 9/32* (2006.01)
*G06T 7/20* (2017.01)     *G08G 1/16* (2006.01)
*B60W 30/095* (2012.01)     *G06K 9/00* (2006.01)

(54) **NEIGUNGSERKENNUNG BEI ZWEIRÄDERN**

ANGLE DETECTION FOR BICYCLES

RECONNAISSANCE D'INCLINAISON POUR DEUX-ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2015 DE 102015224171**

(43) Veröffentlichungstag der Anmeldung:
**07.06.2017 Patentblatt 2017/23**

(73) Patentinhaber: **ROBERT BOSCH GMBH**
**70442 Stuttgart (DE)**

(72) Erfinder: **Lehner, Philipp**
**75417 Muehlacker (DE)**

(56) Entgegenhaltungen:
**US-A1- 2013 282 268**

• **MARC SCHLIPSING ET AL: "Roll angle estimation for motorcycles: Comparing video and inertial sensor approaches", INTELLIGENT VEHICLES SYMPOSIUM (IV), 2012 IEEE, IEEE, 3. Juni 2012 (2012-06-03), Seiten 500-505, XP032452991, DOI: 10.1109/IVS.2012.6232200 ISBN: 978-1-4673-2119-8**

EP 3 176 541 B1

## Beschreibung

### Stand der Technik

Die Erfindung betrifft ein Fahrerassistenzsystem zur Vorhersage von Fahrtrajektorien anderer Fahrzeuge.
In DE102004021590A1 werden eine Vorrichtung und ein Verfahren zur Erkennung eines Neigungswinkels eines Zweirades während der Fahrt mit einem Sensor offenbart, bei denen Beschleunigungen entlang der Hochachse des Zweirades von einem Vertikalbeschleunigungssensor gemessen werden. Über das Verhältnis der gemessenen Beschleunigung zur Erdbeschleunigung wird der Neigungswinkel bestimmt. Ein Verfahren zur Niveauregulierung wird in Abhängigkeit von dem Neigungswinkel des Zweirades aktiviert oder deaktiviert. US 2013/282268 offenbart ein Fahrerassistenzsystem, das mit Hilfe von einer Kamera eine Orientierung eines Zweirads ermittelt, und basierend auf der ermittelten Orientierung ein Bewegungsverlauf des Zweirads prädiziert. Die Orientierung wird definiert als eine Richtung, die von einer Rückseite zu einer Vorderseite des Zweirades zeigt.

MARC SCHLIPSING ET AL: "Roll angle estimation for motorcycles: Comparing video and inertial sensor approaches", INTELLIGENT VEHICLES SYMPOSIUM (IV), 2012 IEEE, IEEE, 3. Juni 2012 (2012-06-03), Seiten 500-505, XP032452991, offenbart wie den Neigungswinkel eines Zweirades während der Fahrt mit einem Sensor, z.B. einem Kamera, bestimmbar ist. In diesem Fall ist die Kamera auf dem Zweirad selbst montiert, und bestimmt das Zweirad seine eigene Neigung.

### Offenbarung der Erfindung

Erfindungsgemäß wird ein Verfahren zum Betrieb eines mit Umfeldsensorik ausgestatteten Fahrzeugs vorgestellt. Im Verfahren wird wenigstens ein vorausfahrendes und/oder entgegenkommendes Zweirad wenigstens abhängig von Daten der Umfeldsensorik erkannt. Zudem wird ein Neigungswinkel des Zweirads wenigstens abhängig von Daten der Umfeldsensorik ermittelt und basierend auf dem ermittelten Neigungswinkel ein Bewegungsverlauf des Zweirads prädiziert. Der Betrieb des Fahrzeugs findet hierbei basierend auf dem prädizierten Bewegungsverlauf statt.

Das erfindungsgemäße Verfahren bietet den Vorteil, dass der Bewegungsverlauf von erkannten Zweirädern prädiziert werden kann, wodurch eine bessere Analyse von Fahrsituationen möglich ist. Beispielsweise kann eine Situationsanalyse in komplexen Szenarien, wie an einer Kreuzung in einer Innenstadt für das automatisierte Fahren verbessert werden.

Bei der Erkennung des Zweirads kann auch jeweils der Fahrer mit erfasst werden. Ob nur das Zweirad oder das Zweirad mit Fahrer ermittelt werden, kann je nach Anwendungsfall und verwendeter Sensorik variieren.

Unter Zweirädern können alle Fahrzeuge mit zwei Rädern verstanden werden, wie Fahrräder, Roller, Mopeds, Mofas oder Motorräder. Als Umfeldsensorik können alle gängigen Sensoren und Erfassungsmittel eingesetzt werden, darunter Kameras, Stereo-Video-Kameras, Ultraschallsensoren, Radarsensoren, Lidar und Laser.

In einer weiteren Ausführungsform des Verfahrens wird zur Erkennung des Zweirads der optische Fluss anhand von mittels der als Kamera ausgebildeten Umfeldsensorik aufgezeichneten Bildsequenzen ermittelt.

Der ermittelte optische Fluss kann vorteilhaft dazu beitragen, Objekte zu segmentieren und damit eine gezielte Suche von Objektlassen im Bildbereich zu ermöglichen. Mittels des optischen Flusses lässt sich die Segmentierung nach Farben und Texturen und die Zuordnung von Punkten zu Objekten optimieren. Typische Objektklassen wären Fußgänger, Pkws, Lkws, Fahrradfahrer, Motoradfahrer, Kinderwagen, Verkehrsschilder, Straßen und weitere im Verkehr vorkommende Gegenstände, Verkehrsteilnehmer, Gebäude, Infrastrukturelemente, Bauten oder Landschaftsmerkmale.

In einer vorteilhaften Ausführungsform des Verfahrens wird bei der Ermittlung des Neigungswinkels eine Eigenbewegung des Fahrzeugs berücksichtigt.

Diese Ausführungsform bietet den Vorteil, dass durch die Berücksichtigung der Eigenbewegung eine genauere Ermittlung des Neigungswinkels möglich ist. Die Eigenbewegung kann hierbei beispielsweise über den Rollwinkel repräsentierende Messdaten gewonnen werden, wie Kamera- und/oder Beschleunigungs- und/oder Drehratensensordaten. Anhand der Eigenbewegung des Fahrzeugs und anhand optischer Merkmale der Straße in einem Videobild kann zudem die Fahrbahnoberfläche bestimmt werden. Diese kann ebenfalls in vorteilhafter Weise zu einer verbesserten Segmentierung von Objekten in einem mit einer Kamera aufgezeichneten Bild beitragen.

In einer weiteren Ausführungsform des Verfahrens wird der Neigungswinkel anhand von wenigstens zwei durch die Umfeldsensorik erfassten Bezugspunkten am Zweirad ermittelt wird.

Diese Ausführungsform bietet den Vorteil, dass eine schnelle und einfache Bestimmung des Neigungswinkels durchgeführt werden kann. Anhand von wenigstens zwei Bezugspunkten am Zweirad, wie beispielsweise dem Fußpunkt, an welchem der Reifen auf der Fahrbahn aufsetzt und einem Front- oder Heckscheinwerfer, kann eine Neigungsgerade und somit der Neigungswinkel des Zweirads bestimmt werden. Als Bezugspunkte kommen auch beliebige weitere Punkte in Frage, wie Reifen, Schutzblech, Federung, Fußraste, ein Lenker, ein Nummernschild, die Position eines Fahrers, Satteltaschen, der Tank und weitere typische Merkmale des zu analysierenden Zweirads. Diese Bezugspunkte können beispielsweise mittels bekannten Bildverarbeitungsverfahren ermittelt werden. Es kann ergänzend auch die Haltung des Fahrers auf dem Zweirad analysiert werden und bei der Bestimmung des Bewegungsverlaufs berücksichtigt werden.

In einer weiteren Ausführungsform des Verfahrens umfasst die Umfeldsensorik eine Kamera. Zur Ermittlung des Neigungswinkels werden hierbei dem Zweirad bestimmte Pixel eines mittels der Kamera aufgezeichneten digitalen Bilds zugewiesen.

Der Vorteil dieser Ausführungsform besteht darin, dass eine Objekterkennung mittels Kameradaten durchgeführt wird, welche das Zweirad von der Umwelt separieren. Im aufgezeichneten Kamerabild werden hierbei einzelne Bereiche dem Zweirad zugewiesen. Hierdurch ist eine weitere Analyse der Position des Zweirads bzw. eine Bestimmung des Neigungswinkels möglich.

In einer weiteren Ausführungsform des Verfahrens wird in wenigstens zwei Zeilen des Bilds jeweils ein mittlerer Spaltenwert der dem Zweirad zugewiesenen Pixel bestimmt. Anhand der mittleren Spaltenwerte wird anschließend der Neigungswinkel des Zweirads ermittelt.

Diese Ausführungsform des Verfahrens bietet den Vorteil, dass durch das zeilenweise Auslesen des Bilds eine sehr schnelle Bestimmung des Neigungswinkels möglich ist. Es müssen hierbei nicht alle Zeilen ausgelesen werden, da bereits zwei bestimmte mittlere Spaltenwerte ausreichend sind, um anhand dieser Spaltenwerte eine Neigungsgerade bzw. den Neigungswinkel des Zweirads zu bestimmen. Die Anzahl der ermittelten Spaltenwerte kann hierbei beliebig gewählt, bzw. an das aufgezeichnete Bild angepasst werden.

In einer besonders vorteilhaften Ausführungsform des Verfahrens werden zur Ermittlung des prädizierten Bewegungsverlaufs Fahrbahnabzweigungen ermittelt. An wenigstens einer ermittelten Fahrbahnabzweigung wird eine vom Zweirad angesteuerte Fahrbahn anhand des Neigungswinkels des Zweirads prädiziert.

Diese Ausführungsform des Verfahrens bietet den Vorteil, dass bei einer ermittelten oder bekannten Fahrbahnabzweigung allein anhand des Neigungswinkels des Zweirads prädiziert werden kann, welche Fahrbahn vom Zweirad und/oder dem Fahrer des Zweirads angesteuert wird. Unter Fahrbahnabzweigungen werden hierbei alle Straßenverläufe verstanden, bei denen es für ein Fahrzeug und/oder einen Fahrer möglich ist, unterschiedliche Fahrbahnen zu befahren und/oder die aktuell befahrene Fahrbahn zu verlassen. Hierunter fallen insbesondere alle denkbaren Kreuzungssituationen, Kreisverkehre, Aus- und Auffahrten auf Straßen, Anfahrten von Parkplätzen und/oder Haltebuchten und/oder eines Standstreifens und Abzweigungen zu Wald- und/oder Feldwegen. Situationen in denen ein Zweirad ein Wendemanöver ausführen könnte, können ebenfalls berücksichtigt werden.

Die Fahrbahnabzweigungen können beispielsweise mit Hilfe der Umfeldsensorik erfasst werden und/oder anhand von Kartenmaterial bestimmt werden, welches beispielsweise in Form einer digitalen Karte vorliegt oder vom Fahrzeug empfangen werden kann.

In einer weiteren Ausführungsform des Verfahrens wird zur Prädiktion des Bewegungsverlaufs die Geschwindigkeit des Zweirads bestimmt. Die Bestimmung erfolgt hierbei insbesondere mittels der Daten der Umfeldsensorik und ergänzend oder alternativ anhand des Neigungswinkels und einer eingelesenen Karteninformation.

Diese Ausführungsform des Verfahrens bietet den Vorteil, dass zusätzlich zum Neigungswinkel die Geschwindigkeit des Zweirads bekannt ist. Hierdurch ist es möglich, den Bewegungsverlauf des Zweirads exakter zu prädizieren.

Wenn Karteninformationen vorliegen, woraus die Krümmung der Fahrbahn hervorgeht, lässt sich anhand der Neigung die Geschwindigkeit des Zweirades abschätzen. Hierdurch ist eine Sensorik, die die Geschwindigkeit direkt messen kann, oder eine Ableitung der Geschwindigkeit über mehrere Messzyklen nicht notwendig. Dies ist ggf. eine wichtige Voraussetzung um kollisionsvermeidende Assistenzsysteme mit günstiger Sensorik realisieren zu können.

In einer weiteren Ausführungsform der Erfindung umfasst der prädizierte Bewegungsverlauf eine Fahrtrajektorie, welche anhand des ermittelten Neigungswinkels und der ermittelten Geschwindigkeit prädiziert wird.

Diese Ausführungsform des Verfahrens bietet den Vorteil, dass mit Hilfe des Neigungswinkels und der Geschwindigkeit des Zweirads eine sehr genaue Vorhersage der Fahrtrajektorie des Zweirads möglich ist. Mit Hilfe dieser Trajektorie lässt sich die Position des Zweirads zu unterschiedlichen Zeitpunkten vorhersagen. Diese Information kann gewinnbringend dazu verwendet werden, die Verkehrssituation zu analysieren und im Falle einer Gefahr Maßnahmen zu ergreifen.

In einer vorteilhaften Ausführungsform des Verfahrens sieht der Betrieb des Fahrzeugs eine Ansteuerung einer Warnvorrichtung und/oder eine Ansteuerung wenigstens eines in die Fahrdynamik des Fahrzeugs eingreifenden Aktuators vor. Anhand des prädizierten Bewegungsverlaufs des Zweirads wird hierbei ermittelt, ob das Zweirad auf eine von dem Fahrzeug befahrene Fahrspur zusteuert.

Diese Ausführungsform des Verfahrens bietet den Vorteil, dass anhand der vorliegenden Fahrsituation mittels der Warnvorrichtung ein Warnsignal für einen Fahrer und/oder weitere Fahrzeuge und/oder weitere Fahrer und/oder Verkehrsteilnehmer erzeugt werden kann, falls eine Gefahrensituation vorliegt. Des Weiteren ist es möglich, dass eine Ansteuerung wenigstens eines in die Fahrdynamik des Fahrzeugs eingreifenden Aktuators durchgeführt wird. Wird beispielsweise festgestellt, dass das Zweirad auf eine vom Fahrzeug befahrene Spur zusteuert und dass eine Gefahr einer Kollision besteht, so kann mittels des Verfahrens eine Notbremsung und/oder ein Ausweichmanöver und/oder ein anderer Eingriff in die Fahrdynamik vorgenommen werden, um eine Kollision zu vermeiden und/oder einen möglichen Schaden zu reduzieren. Die vom Fahrzeug befahrene Fahrspur kann hierbei beispielsweise mit Hilfe der Umfeldsensorik und/oder Karteninformationen erfolgen. Für eine exaktere Analyse der Verkehrssituation und zur Feststellung, ob tatsächlich eine Kollision droht, kann auch die Trajektorie des Fahrzeugs bestimmt werden. Diese kann mit dem prädizierten Bewegungsverlauf und ggf. mit der Fahrtrajektorie des Zweirads abgeglichen werden, falls die bestimmt wurde.

Weiterhin wird eine Vorrichtung zum Betrieb eines mit Umfeldsensorik ausgestatteten Fahrzeugs beansprucht. Die Vorrichtung ist dafür ausgelegt, wenigstens ein vorausfahrendes und/oder entgegenkommendes Zweirad zu erkennen und einen Bewegungsverlauf des Zweirads zu prädizieren. Zur Prädiktion des Bewegungsverlaufs wird ein Neigungswinkel des Zweirads abhängig von Daten der Umfeldsensorik erkannt. Der Betrieb des Fahrzeugs erfolgt basierend auf dem prädizierten Bewegungsverlauf, wobei der Bewegungsverlauf mittels des beanspruchten Verfahrens prädiziert wird.

Zudem wird ein Computerprogramm beansprucht, welches dazu eingerichtet ist, alle Schritte des beanspruchten Verfahrens auszuführen.

Zeichnungen

Fig. 1 zeigt einen schematischen Verfahrensablauf.
Fig. 2 zeigt ein entgegenkommendes Motorrad in Kurvenlage.
Fig. 3 zeigt eine schematische Krafteinwirkung auf ein Motorrad.
Fig. 4 zeigt eine Möglichkeit der Neigungswinkelbestimmung.
Fig. 5 zeigt ein Motorrad in einer Kurve.

Ausführungsbeispiel

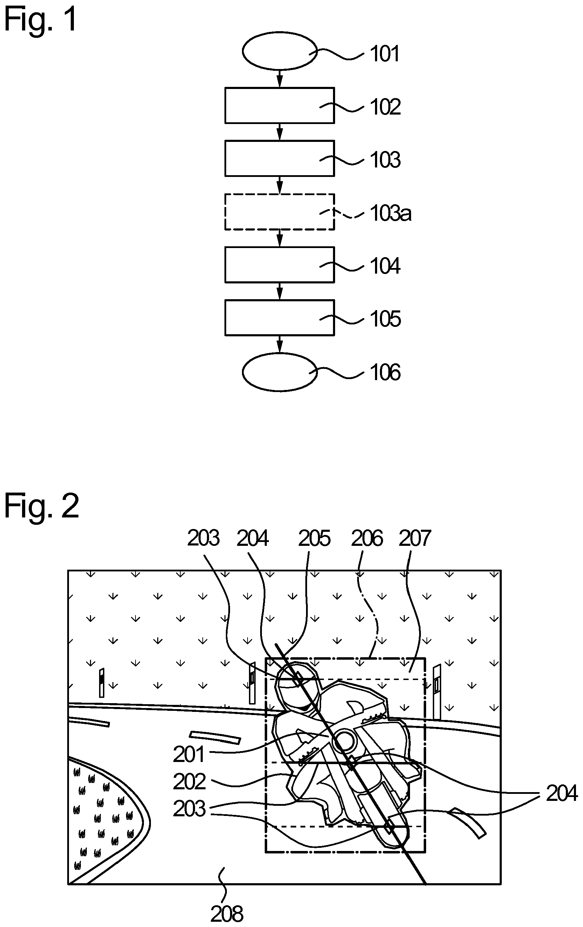

Im folgenden Ausführungsbeispiel ist ein Fahrzeug mit Umfeldsensorik, insbesondere einer Kamera, und einer Vorrichtung ausgestattet, welche einen Betrieb des Fahrzeugs ermöglicht. Die Vorrichtung ist dazu ausgelegt, Zweiräder zu erkennen, deren Neigungswinkel zu bestimmen und anhand des Neigungswinkels einen Bewegungsverlauf der Zweiräder zu prädizieren. Basierend auf dem prädizierten Bewegungsverlauf kann die Vorrichtung das Fahrzeug betreiben. Zum Prädizieren des Bewegungsverlaufs wird auf der Vorrichtung mittels eines Computerprogramms ein Verfahren ausgeführt, dessen schematischer Ablauf in Figur 1 abgebildet ist. Das Verfahren startet in Schritt 101.

In Schritt 102 wird zunächst mittels eines mit der Kamera aufgezeichneten Videobilds und mittels bekannter Klassifikationsverfahren (z.B. Neuronale Netze, Decision Trees, Viola-Jones) ein vorausfahrendes oder entgegenkommendes Zweirad 201, 401, 501 erkannt. Anhand der Eigenbewegung des Fahrzeugs und anhand optischer Merkmale der Straße 208 im Videobild, kann die Fahrbahnoberfläche 402 geschätzt werden. Dazu können bspw. Segmentierungsverfahren verwendet werden, die anhand der Textur diejenigen Bildbereiche extrahieren, die der Fahrbahnoberfläche entsprechen. Alternativ dazu können die aus einer Bildsequenz berechneten Flussvektoren mit der bei der erwarteten Bewegung der Grundfläche verglichen werden, die sich aus Sicht der Kamera und bei bekannter Eigenbewegung des Fahrzeugs ermitteln lässt. Bildbereiche, deren Flussvektoren mit der relativ zum Fahrzeug bewegten Grundfläche näherungsweise übereinstimmen, können der Grund- bzw. Fahrbahnoberfläche zugeordnet werden. Der optische Fluss, der anhand von Bildsequenzen bestimmt wird, kann einen wichtigen Beitrag zur Segmentierung von Objekten und damit auch zur gezielten Suche von Objektklassen in Bildbereichen leisten. Zu den im Bild erkannten Objekten werden auch die entsprechenden Bildbereiche 207, 407 bestimmt und als Rechteck (Bounding Box) 206, 406 angegeben. In diesem Ausführungsbeispiel wird ein Motorrad 201, 401 erkannt, welches entsprechend mit einer Bounding Box 206, 406 versehen wird. Nun werden in dem Bildbereich 207, 407 alle Pixel bestimmt, die dem Objekt - d.h. nicht dem "Hintergrund" - zugehörig sind. Dazu können bekannte Verfahren der Bildverarbeitung zur Segmentierung wie bspw. Schwellwert-Verfahren oder der Felzenszwalb-Huttenlocher-Algorithmus verwendet werden. Letzterer ist ein kantenorientiertes Verfahren zur Segmentierung eines Bildes in Objekte. Der Algorithmus legt zuerst zwischen je zwei benachbarten Pixeln eines Bildes eine Kante, die nach Merkmalen wie dem Unterschied in Helligkeit und Farbe der jeweils angrenzenden Pixel gewichtet werden. Anschließend werden aus jedem einzelnen Pixel Bildsegmente gebildet, die so verschmolzen werden, dass der Unterschied zwischen den Kantengewichtungen innerhalb eines Segments möglichst gering bleibt und zwischen benachbarten Segmenten möglichst groß wird.

In Schritt 103 wird anschließend der Neigungswinkel 303 des Zweirads 201, 401 bestimmt. Für jede Bildzeile 203 des Bildbereichs 207, 407 wird hierfür eine Art "Mittelpunkt", bzw. ein mittlerer Spaltenwert 204 bestimmt, indem der Median der horizontalen Position aller dem Objekt zugehörigen Pixel 202 bestimmt wird. Schließlich kann durch Ausgleichsrechnung annähernd eine Gerade 205, 405 durch die mittleren Spaltenwerte 204 bestimmt werden. Durch das iterative RANSAC-Verfahren können ggf. Ausreißer herausgefiltert und die Gerade 205, 405 noch besser bestimmt werden. Die Neigung der Geraden 205, 405 bzgl. der Horizontalen spiegelt die Neigung des Motorrads 201, 401 wieder, wodurch der Neigungswinkel 303 des Motorrads 201, 401 bestimmt werden kann.

Das beschriebene Verfahren zur Bestimmung des Neigungswinkels 303 muss nicht auf alle Bildzeilen 203 (gestrichelt plus durchgezogene Linie 203) angewandt werden. Es reicht aus, wenn wenigstens zwei Bildzeilen 203 verteilt über die vertikale Ausdehnung der Bounding Box 206, 406 betrachtet und darin die dem Zweirad zugehörigen Pixel (durchgezogene Linie 202) und von diesen Pixeln 202 (durchgezogene Linie 203) die mittleren Spaltenwerte 204 bestimmt werden. Dies reduziert den Rechenaufwand erheblich, bei nahezu gleichbleibendem Nutzen.

Liegen statt Bildpunkten 3D-Informationen über das Umfeld z.B. in Form von 3D-Punktwolken vor, wie sie z. B. mithilfe von Laserscannern oder Stereo-Kameras erzeugt werden können, kann eine Segmentierung des Objekts noch zuverlässiger durch die Abstände zu anderen Objekten und die Erhebung von der leicht zu bestimmenden Grundfläche/Fahrbahnebene 208 durchgeführt werden. Die Bestimmung der Neigungsgeraden 205, 405 kann analog zum oben beschriebenen Verfahren über "Mittelpunkte" erfolgen.

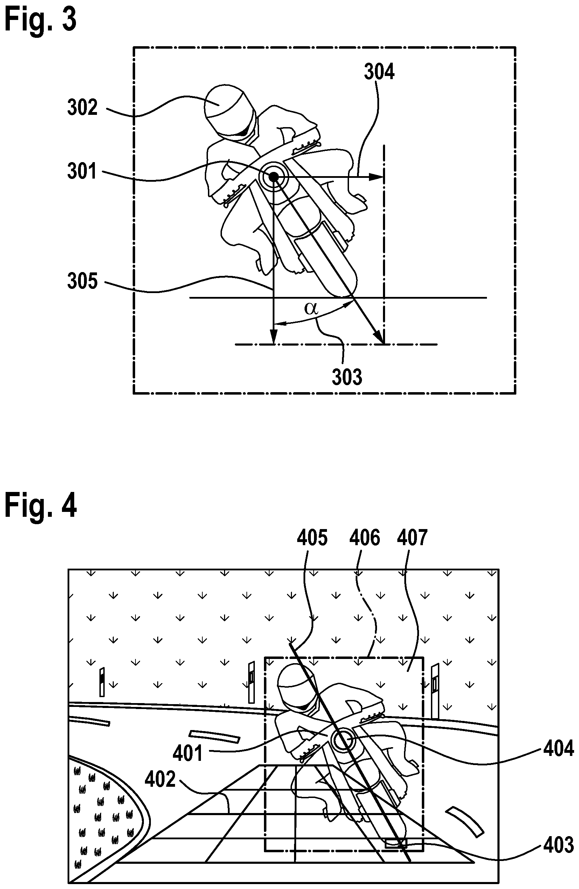

Alternativ kann die Bestimmung des Neigungswinkels 303 in Schritt 103 auch anhand von wenigstens zwei durch die Umfeldsensorik erfassten Bezugspunkten 403, 404 am Zweirad 201, 401 ermittelt werden. In diesem Ausführungsbeispiel werden, wie in Figur 4 dargestellt, als Bezugspunkte der Fußpunkt 403 und der Schweinwerfer 404 gewählt. Im unteren Bereich des relevanten Bildausschnitts 207, 407 wird nach dem Fußpunkt 403, dem Aufsatzpunkt des Zweirads auf der Fahrbahn, gesucht. Bei bekanntem Abstand des Zweirads 201, 401 (z. B. durch Messung mittels Radar oder eine Stereo-Kamera) und der Kenntnis bzw. einer Abschätzung der Fahrbahn 201 kann der horizontale Bildbereich bestimmt werden, in dem sich der Fußpunkt 403 befindet.

Anschließend wird durch bekannte Bildverarbeitungsverfahren (z.B. Blob-Detection) die Position eines Schweinwerfers 404 und/oder eines Rücklichts des Zweirads 201, 401 im Bild ermittelt. Dabei werden in dem Bild, begrenzte und zusammenhängende Bereiche bestimmt, deren Bildpunkte ähnlich sind, d.h. ähnliche Farb- oder/und Helligkeitswerte aufweisen. Bei Motorrädern ist auch bei Tag das Einschalten des Lichts 404 Pflicht und vereinfacht daher eine Erkennung im Bild. Die Neigungsgerade 205, 405 und somit der Neigungswinkel 303 kann nun näherungsweise durch den Fußpunkt 403 und die Lichtposition 404 bestimmt werden.

In Schritt 104 wird anhand des Neigungswinkels 303 ein Bewegungsverlauf des Zweirads 201, 401, 501 prädiziert. Zur Prädiktion einer vom Zweirad 201, 401, 501 angesteuerten Fahrbahn 208, 502, 503 wird nicht zwingend die Geschwindigkeit des Zweirads 201, 401, 501 benötigt. Ist das Zweirad 201, 401, 501 signifikant geneigt, also der Neigungswinkel 303 entsprechend groß, lässt sich daraus schließen, dass sich das Zweirad 201, 401, 501 in Bewegung (mit der absoluten Geschwindigkeit $|v|>0$) auf einer gekrümmten Bahn (mit der Krümmung $|\kappa|>0$) befindet und in welche Richtung diese Krümmung $\kappa$ weist.

Für eine Beurteilung, ob das Zweirad z.B. abbiegt, also welche Fahrbahn angesteuert wird, reicht diese Information in vielen Anwendungsfällen bereits aus.

Eine solche Abbiegeklassifikation erlaubt bereits eine Interpretation der Verkehrssituation. Eine Kombination mit Informationen über Fahrbahnabzweigungen bzw. den Fahrbahnverlauf aus einer Karte und die Annahme, dass das Zweirad 201, 401, 501 eine Straße 208 und/oder einen Fahrradweg befährt, erlauben dann eine gute Prädiktion des Bewegungsverlaufs des Zweirades 201, 401, 501.

Die Fahrbahnabzweigungen können beispielsweise mit Hilfe der Umfeldsensorik erfasst werden und/oder anhand von Kartenmaterial bestimmt werden, welches beispielsweise in Form einer digitalen Karte vorliegt oder vom Fahrzeug empfangen werden kann.

Für die Prädiktion der angesteuerten Fahrbahn können bestimmte Schwellwerte festgelegt werden, ab denen eine bestimmte Fahrbahn prädiziert wird. Diese Schwellwerte können entweder fest vorgegeben sein und/oder an den jeweiligen Straßenverlauf und die erkannten Fahrbahnabzweigungen angepasst werden. Je nach Winkel, in welchem beispielsweise eine Seitenstraße die aktuell vom Zweirad 201, 401, 501 befahrene Straße kreuzt, kann der Schwellwert für den Neigungswinkel 303 verändert werden, ab welchem ein Befahren der Seitenstraße prädiziert wird.

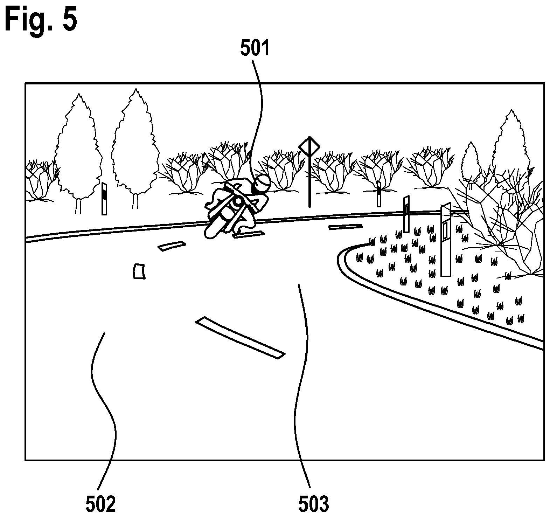

Anhand des Neigungswinkels 303 und der Position des Zweirads 201, 401, 501 lässt sich in einigen Fahrsituationen bereits herleiten (siehe Figur 5), ob das Zweirad 501 im weiteren Verlauf die Straßenseite 502, 503 wechseln und auf die Straßenseite 503 des Gegenverkehrs kommen wird.

Für eine exaktere Prädiktion des Bewegungsverlaufs eines Zweirads 201, 401, 501 kann in einem optionalen Schritt 103a die Geschwindigkeit des Zweirads 201, 401, 501 bestimmt werden.

Die Geschwindigkeit kann direkt, z. B. mit von der Umfeldsensorik umfassten Radarsensoren über die Auswertung von Dopplerfrequenzen gemessen, und/oder indirekt über mehrere Messungen des Objektabstandes (Abstand Fahrzeug zum Zweirad 201, 401, 501) ermittelt werden (zeitliches Tracking). Diese Messungen können beispielsweise mit einer Kamera und/oder Stereovideokamera durchgeführt werden, welche ebenfalls von der Umfeldsensorik umfasst werden kann. Zur Erhöhung der Genauigkeit kann zusätzlich die Eigenbewegung des Fahrzeugs berücksichtigt werden, die z.B. über Odometrie oder Inertialnavigation ermittelt werden kann. Für die Inertialnavigation würden Daten aus einem Trägheitsnavigationssystem bzw. einem inertialen Navigationssystem verwendet werden, wobei unter einem Trägheitsnavigationssystem ein 3-D-Messsystem mit Beschleunigungssensoren und Kreiselstabilisierung und/oder Drehratensensoren verstanden wird. Ebenso kann eine einen Rollwinkel repräsentierende Information und damit auch die Rollbewegung der Sensorik kompensierend berücksichtigt werden.

Alternativ oder ergänzend kann die Geschwindigkeit des Zweirads 201, 401, 501 mit Hilfe von einer eingelesenen Karteninformation bestimmt werden. Die Karteninformationen kann insbesondere eine Information über die vom Zweirad 201, 401, 501 befahrene Strecke enthalten, zum Beispiel über den Verlauf von Kurven, durch welche das Zweirad 201, 401, 501 fährt und/oder Informationen über die Verkehrssituation an Kreuzungen, Abbiegemöglichkeiten, Ampeln, Vorfahrtsregeln, etc. Sind die Karteninformationen der Karte hinreichend genau, sodass die Krümmung $\kappa$ des Straßenverlaufs anhand der Karteninformationen ermittelt werden kann, lässt sich darüber hinaus mittels der Formel

$$\tan \alpha = \frac{F_Z}{F_G} = \frac{\kappa v^2}{g}$$

die Geschwindigkeit des Zweirads 201, 401, 501 bestimmen und/oder abschätzen. Die Formel gilt näherungsweise bei einer stabilen Kurvenfahrt eines Zweirads 201, 401, 501. $\alpha$ entspricht hierbei dem Neigungswinkel, $F_Z$ 304 der Zentrifugalkraft, $F_G$ 305 der Gravitationskraft, g der Erdbeschleunigung und $v$ der Geschwindigkeit. Die Kräfte greifen jeweils am Schwerpunkt 301 des Zweirads 201, 401, 501, inklusive eines möglicherweise vorhandenen Fahrers 302 an (siehe Figur 3). Anhand nur eines Einzelbilds und der Kenntnis der Straßenkrümmung $\kappa$ lässt sich die Geschwindigkeit des Zweirads 201, 401, 501 bestimmen. Dies ist eine wichtige Voraussetzung um kollisionsvermeidende Assistenzsysteme mit günstiger Sensorik realisieren zu können und um schnelle und frühzeitige Entscheidungen für Assistenzsysteme wie einen Notbremsassistenten zu ermöglichen.

Ist sowohl der Neigungswinkel 303 als auch die Geschwindigkeit des Zweirads 201, 401, 501 bekannt, lässt sich aus diesen Werten die Fahrtrajektorie des Zweirads 201, 401, 501 bestimmen. Mit dieser können noch exaktere Aussagen übern den zukünftigen Bewegungsverlauf des Zweirads 201, 401, 501 getätigt werden.

In Schritt 105 wird das Fahrzeug basierend auf dem prädizierten Bewegungsverlauf des Zweirads 201, 401, 501 betrieben.

Lässt sich beispielsweise aus dem prädizierten Bewegungsverlauf schließen, dass das Zweirad 501 auf die Fahrspur des Fahrzeugs fahren wird und eine Kollision droht, kann ein Warnsignal an den Fahrer des Fahrzeugs und/oder weitere Verkehrsteilnehmer gesendet werden. Alternativ oder ergänzend kann auch ein Aktuator angesteuert werden, welcher in die Fahrdynamik des Fahrzeugs eingreift. Beispielsweise kann automatisiert ein Brems- und/oder Ausweichmanöver durchgeführt werden. Die Funktion kann somit auch in hoch- oder vollautomatisierten Fahrzeugen eingesetzt werden.

Ob die Gefahr eines Unfalls droht, lässt sich beispielsweise auch durch einen Vergleich zwischen der Krümmung der ermittelten Fahrtrajektorie des Zweirads 201, 401, 501 und der Krümmung des Fahrbahnverlaufs, welche z. B. über Kameradaten bestimmt wird oder in Form von Navigationskarten vorliegt, vorhersagen.

Das Verfahren endet in Schritt 106.

**Patentansprüche**

1. Verfahren zum Betrieb eines mit Umfeldsensorik ausgestatteten Fahrzeugs, bei welchem wenigstens ein vorausfahrendes und/oder entgegenkommendes Zweirad (201, 401, 501) wenigstens abhängig von Daten der Umfeldsensorik erkannt wird, **dadurch gekennzeichnet, dass** ein Neigungswinkel (303) des Zweirads (201, 401, 501) wenigstens abhängig von Daten der Umfeldsensorik ermittelt und basierend auf dem ermittelten Neigungswinkel (303) ein Bewegungsverlauf des Zweirads (201, 401, 501) prädiziert wird und das Fahrzeug basierend auf dem prädizierten Bewegungsverlauf betrieben wird.

2. Verfahren nach Anspruch 1, **dadurch gekennzeichnet, dass** zur Erkennung des Zweirads (201, 401, 501) der optische Fluss anhand von mittels der als Kamera ausgebildeten Umfeldsensorik aufgezeichneten Bildsequenzen ermittelt wird.

3. Verfahren nach einem der vorhergehenden Ansprüche, **dadurch gekennzeichnet, dass** bei der Ermittlung des Neigungswinkels (303) eine Eigenbewegung des Fahrzeugs berücksichtigt wird.

4. Verfahren nach einem der vorhergehenden Ansprüche, **dadurch gekennzeichnet, dass** der Neigungswinkel (303) anhand von wenigstens zwei durch die Umfeldsensorik erfassten Bezugspunkten (403, 404) am Zweirad (201, 401, 501) ermittelt wird.

5. Verfahren nach einem der vorhergehenden Ansprüche, **dadurch gekennzeichnet, dass** die Umfeldsensorik als Kamera ausgebildet ist und zur Ermittlung des Neigungswinkels (303) dem Zweirad (201, 401, 501) bestimmte Pixel eines mittels der Kamera aufgezeichneten digitalen Bilds zugewiesen werden.

6. Verfahren nach Anspruch 5, **dadurch gekennzeichnet, dass** in wenigstens zwei Zeilen des Bilds ein mittlerer Spaltenwert (204) der dem Zweirad (201, 401, 501) zugewiesenen Pixel bestimmt wird und anhand der mittleren Spaltenwerte (204) der Neigungswinkel (303) ermittelt wird.

7. Verfahren nach einem der vorhergehenden Ansprüche, **dadurch gekennzeichnet, dass** zur Ermittlung des prädizierten Bewegungsverlaufs Fahrbahnabzweigungen ermittelt werden und an wenigstens einer ermittelten Fahrbahnabzweigung eine vom Zweirad (201, 401, 501) angesteuerte Fahrbahn anhand des Neigungswinkels (303) prädiziert wird.

8. Verfahren nach einem der vorhergehenden Ansprüche, **dadurch gekennzeichnet, dass** zur Prädiktion des Bewegungsverlaufs die Geschwindigkeit des Zweirads (201, 401, 501) bestimmt wird, wobei die Geschwindigkeit insbesondere

   - mittels der Daten der Umfeldsensorik und/oder
   - anhand des Neigungswinkels (303) und einer eingelesenen Karteninformation bestimmt wird.

9. Verfahren nach Anspruch 8, **dadurch gekennzeichnet, dass** der prädizierte Bewegungsverlauf eine Fahrtrajektorie umfasst, welche anhand des ermittelten Neigungswinkels (303) und der ermittelten Geschwindigkeit prädiziert wird.

10. Verfahren nach einem der vorhergehenden Ansprüche, **dadurch gekennzeichnet, dass** der Betrieb des Fahrzeugs eine Ansteuerung einer Warnvorrichtung und/oder eine Ansteuerung wenigstens eines in die Fahrdynamik des Fahrzeugs eingreifenden Aktuators vorsieht, wobei anhand des prädizierten Bewegungsverlaufs des Zweirads (201, 401, 501) ermittelt wird, ob das Zweirad (201, 401, 501) auf eine von dem Fahrzeug befahrene Fahrspur 503 zusteuert.

11. Vorrichtung zum Betrieb eines mit Umfeldsensorik ausgestatteten Fahrzeugs, welche dafür ausgelegt ist, wenigstens ein vorausfahrendes und/oder entgegenkommendes Zweirad (201, 401, 501) zu erkennen und einen Bewegungsverlauf des Zweirads (201, 401, 501) zu prädizieren, **dadurch gekennzeichnet, dass** zur Prädiktion des Bewegungsverlaufs ein Neigungswinkel (303) des Zweirads (201, 401, 501) abhängig von Daten der Umfeldsensorik erkannt wird, und der Betrieb des Fahrzeugs basierend auf dem prädizierten Bewegungsverlauf erfolgt, wobei der Bewegungsverlauf mittels eines Verfahrens nach wenigstens einem der Ansprüche 1-10 prädiziert wird.

12. Computerprogramm, welches eingerichtet ist, alle Schritte eines Verfahrens nach einem der Ansprüche 1-10 auszuführen.

## Claims

1. Method for operating a vehicle equipped with a driving environment sensor system, in which at least one preceding and/or oncoming two-wheeled vehicle (201, 401, 501) is identified at least depending on data of the driving environment sensor system, **characterized in that** a tilt angle (303) of the two-wheeled vehicle (201, 401, 501) is ascertained at least depending on data of the driving environment sensor system and a movement profile of the two-wheeled vehicle (201, 401, 501) is predicted on the basis of the ascertained tilt angle (303) and the vehicle is operated on the basis of the predicted movement profile.

2. Method according to Claim 1, **characterized in that**, for the purposes of identifying the two-wheeled vehicle (201, 401, 501), the optical flow is ascertained on the basis of image sequences recorded by means of the driving environment sensor system that is embodied as a camera.

3. Method according to either of the preceding claims, **characterized in that** an inherent motion of the vehicle is taken into account when ascertaining the tilt angle (303).

4. Method according to any one of the preceding claims, **characterized in that** the tilt angle (303) is ascertained on the basis of at least two reference points (403, 404), captured by the driving environment sensor system, on the two-wheeled vehicle (201, 401, 501) .

5. Method according to any one of the preceding claims, **characterized in that** the driving environment sensor system is embodied as a camera and, for the purposes of ascertaining the tilt angle (303), certain pixels of a digital image recorded by means of the camera are assigned to the two-wheeled vehicle (201, 401, 501).

6. Method according to Claim 5, **characterized in that** a mean column value (204) of the pixels that are assigned to the two-wheeled vehicle (201, 401, 501) is ascertained in at least two lines of the image and the tilt angle (303) is ascertained on the basis of the mean column values (204).

7. Method according to any one of the preceding claims, **characterized in that** carriageway turnings are ascertained for the purposes of ascertaining the predicted movement profile and a carriageway towards which the two-wheeled vehicle (201, 401, 501) is headed at at least one ascertained carriageway turning is predicted on the basis of the tilt angle (303).

8. Method according to any one of the preceding claims, **characterized in that** the speed of the two-wheeled vehicle (201, 401, 501) is determined for the purposes of predicting the movement profile, wherein the speed is determined, in particular,

   - by means of the data of the driving environment sensor system and/or
   - on the basis of the tilt angle (303) and a read map information item.

9. Method according to Claim 8, **characterized in that** the predicted movement profile comprises a driving trajectory that is predicted on the basis of the ascertained tilt angle (303) and the ascertained speed.

10. Method according to any one of the preceding claims, **characterized in that** the operation of the vehicle provides for an actuation of a warning apparatus and/or an actuation of at least one actuator that intervenes in the driving dynamics of the vehicle, wherein the predicted movement profile of the two-wheeled vehicle (201, 401, 501) is used to ascertain whether the two-wheeled vehicle (201, 401, 501) is heading toward a lane 503 on which the vehicle is driving.

11. Apparatus for operating a vehicle equipped with a driving environment sensor system, said apparatus being designed to identify at least one preceding and/or oncoming two-wheeled vehicle (201, 401, 501) and to predict a movement profile of the two-wheeled vehicle (201, 401, 501), **characterized in that,** for the purposes of predicting the movement profile, the tilt angle (303) of the two-wheeled vehicle (201, 401, 501) is identified depending on the data of the driving environment sensor system and the operation of the vehicle is effectuated on the basis of the predicted movement profile, wherein the movement profile is predicted by means of a method according to at least one of Claims 1 to 10.

12. Computer program, configured to carry out all steps of a method according to any one of Claims 1 to 10.

**Revendications**

1. Procédé pour la manoeuvre d'un véhicule équipé de capteurs d'environnement, dans lequel au moins un deux-roues (201, 401, 501) précédent et/ou venant en sens inverse est détecté au moins en fonction de données provenant des capteurs d'environnement, **caractérisé en ce qu'**un angle d'inclinaison (303) du deux-roues (201, 401, 501) est déterminé au moins en fonction de données provenant des capteurs d'environnement, **en ce qu'**une trajectoire de déplacement du deux-roues (201, 401, 501) est prédite sur la base de l'angle d'inclinaison déterminé (303) et **en ce que** le véhicule est manoeuvré sur la base de la trajectoire de déplacement prédite.

2. Procédé selon la revendication 1, **caractérisé en ce que** le flux optique permettant de détecter le deux-roues (201, 401, 501, 501) est déterminé sur la base de séquences d'images enregistrées au moyen des capteurs d'environnement réalisés sous la forme d'une caméra.

3. Procédé selon l'une des revendications précédentes, **caractérisé en ce qu'**un déplacement propre du véhicule est pris en compte lors de la détermination de l'angle d'inclinaison (303).

4. Procédé selon l'une des revendications précédentes, **caractérisé en ce que** l'angle d'inclinaison (303) est déterminé sur la base d'au moins deux points de référence (403, 404) situés sur le deux-roues (201, 401, 501, 501) et détectés par les capteurs d'environnement.

5. Procédé selon l'une des revendications précédentes, **caractérisé en ce que** les capteurs d'environnement sont réalisés sous la forme d'une caméra et **en ce que** des pixels d'une image numérique enregistrée au moyen de la caméra sont associés au deux-roues (201, 401, 501) afin de déterminer l'angle d'inclinaison (303).

6. Procédé selon la revendication 5, **caractérisé en ce qu'**une valeur de colonne moyenne (204) des pixels associés au deux-roues (201, 401, 501) est déterminée dans au moins deux lignes de l'image et **en ce que** l'angle d'inclinaison (303) est déterminé à partir des valeurs de colonne moyennes (204).

7. Procédé selon l'une des revendications précédentes, **caractérisé en ce que** des bifurcations de route sont déterminées pour déterminer la trajectoire de déplacement prédite et **en ce qu'**une route sur laquelle le deux-roues (201, 401, 501) se dirige est prédite sur la base de l'angle d'inclinaison (303) au niveau d'au moins une bifurcation de route déterminée.

8. Procédé selon l'une des revendications précédentes, **caractérisé en ce que** la vitesse du deux-roues (201, 401, 501) est déterminée pour prédire la trajectoire de déplacement, dans lequel la vitesse est déterminée en particulier

    - au moyen des données des capteurs d'environnement et/ou
    - sur la base de l'angle d'inclinaison (303) et d'une information cartographique lue.

9. Procédé selon la revendication 8, **caractérisé en ce que** la trajectoire de déplacement prédite comprend une trajectoire de conduite qui est prédite sur la base de l'angle d'inclinaison déterminé (303) et de la vitesse déterminée.

10. Procédé selon l'une des revendications précédentes, **caractérisé en ce que** la manoeuvre du véhicule prévoit l'activation d'un dispositif d'avertissement et/ou l'activation d'au moins un actionneur qui intervient dans la dynamique de conduite du véhicule, dans lequel il est déterminé sur la base de la trajectoire de déplacement prédite du deux-roues (201, 401, 501) si le deux-roues (201, 401, 501) se dirige vers une voie (503) parcourue par le véhicule.

11. Dispositif pour la manoeuvre d'un véhicule équipé de capteurs d'environnement, qui est conçu pour détecter au moins un deux-roues (201, 401, 501) précédent et/ou venant en sens inverse et pour prédire une trajectoire de déplacement du deux-roues (201, 401, 501), **caractérisé, en ce qu'**un angle d'inclinaison (303) du deux-roues (201, 401, 501) est détecté en fonction de données des capteurs d'environnement afin de prédire la trajectoire de déplacement, et **en ce que** la manoeuvre du véhicule est effectuée sur la base de la trajectoire de déplacement prédite, dans lequel la trajectoire de déplacement est prédite au moyen d'un procédé selon au moins l'une des revendications 1 à 10.

12. Programme d'ordinateur conçu pour exécuter toutes les étapes d'un procédé selon l'une des revendications 1 à 10.

# Fig. 1

# Fig. 2

## Fig. 3

## Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004021590 A1

- US 2013282268 A

**In der Beschreibung aufgeführte Nicht-Patentliteratur**

- Roll angle estimation for motorcycles: Comparing video and inertial sensor approaches. **MARC SCHLIPSING et al.** INTELLIGENT VEHICLES SYMPOSIUM (IV), 2012 IEEE. IEEE, 03. Juni 2012, 500-505